Europäisches Patentamt

European Patent Office

Office européen des brevets

(11) Veröffentlichungsnummer: **0 485 448 B1**

(12) **EUROPÄISCHE PATENTSCHRIFT**

(45) Veröffentlichungstag der Patentschrift: **22.06.94**

(51) Int. Cl.5: **G11B 11/10**

(21) Anmeldenummer: **90911757.4**

(22) Anmeldetag: **29.06.90**

(86) Internationale Anmeldenummer:
**PCT/EP90/01038**

(87) Internationale Veröffentlichungsnummer:
**WO 91/01553 (07.02.91 91/04)**

(54) **MAGNETO-OPTISCHES AUFNAHME- UND/ODER WIEDERGABEGERÄT.**

(30) Priorität: **14.07.89 DE 3923328**

(43) Veröffentlichungstag der Anmeldung:
**20.05.92 Patentblatt 92/21**

(45) Bekanntmachung des Hinweises auf die
Patenterteilung:
**22.06.94 Patentblatt 94/25**

(84) Benannte Vertragsstaaten:
**AT BE CH DE DK ES FR GB IT LI LU NL SE**

(56) Entgegenhaltungen:
**EP-A- 0 173 533**

**PATENT ABSTRACTS OF JAPAN, Band 11, Nr. 37 (P-543)(2484), 4. Februar 1987;& JP-A-61206947**

**PATENT ABSTRACTS OF JAPAN, Band 11, Nr. 112 (P-565)(2559), 9. April 1987;& JP-A-61260436**

(73) Patentinhaber: **Deutsche Thomson-Brandt GmbH**
**Hermann-Schwer-Strasse 3**
**Postfach 1307**
**D-78003 Villingen-Schwenningen(DE)**

(72) Erfinder: **MORIMOTO, Yasuaki**
**2-8-1-208 Schinden Ichikawa-Shi**
**Chiba-ken(JP)**
Erfinder: **ZUCKER, Friedhelm**
**Albert-Schweitzer-Strasse 8**
**D-7733 Mönchweiler(DE)**

PATENT ABSTRACTS OF JAPAN, Band 10, Nr. 160 (P-465)(2216), 7. Juni 1986;& JP-A-61013458

PATENT ABSTRACTS OF JAPAN, Band 10, Nr. 202 (P-477)(2258), 15. Juli 1986;& JP-A-61042738

JAPANESE JOURNAL OF APPLIED PHYSICS, SUPPLEMENTS. Band 26, Nr. 26-4, 1987, Tokyo, JP; Seiten 117-120; NAKAMURA et al.: "Compact two-beam head with a hybrid two-wavelength laser array for magneto-optic recording"

## Beschreibung

Die Erfindung betrifft ein magneto-optisches Aufnahme- und/oder Wiedergabegerät für einen Aufzeichnungsträger, auf dem Daten sowohl mittels sogenannter Pits als auch in einer magneto-optischen Schicht gespeichert sind, wobei daß zum Abtasten der Pits ein erster Laser dient, dessen Wettenlänge $\lambda_1$ etwa viermal so groß gewählt ist wie die Pittiefe und wobei zum Lesen der in der magneto-optischen Schicht gespeicherten Daten ein zweiter Laser dient, dessen Wellenlänge $\lambda_2$ etwa doppelt so groß gewählt ist wie die Pittiefe.

Weil ein derartiges magneto-optisches Aufzeichnungs- und Wiedergabegerät sowohl mittels Pits gespeicherte Daten als auch in einer magneto-optischen Schicht aufgezeichnete Daten gleichzeitig lesen können soll, ist darauf zu achten, daß sich die beiden Datensignale nicht gegenseitig z.B. durch übersprechen stören.

Es ist daher Aufgabe der Erfindung, ein magneto-optisches Aufzeichnungs- und/oder Wiedergabegerät gemäß Oberbegriff des Anspruchs 1 so zu gestalten, daß gleichzeitig die mittels der Pits und die in der magneto-optischen Schicht gespeicherten Daten gelesen werden können, ohne daß sich die beiden Datensignale gegenseitig störend beeinflußen.

Die Erfindung löst diese Aufgabe dadurch, daß der zweite Laser dadurch automatisch auf die richtige Weltenlänge abgestimmt wird, daß das vom zweiten Laser ausgesendete Licht vom Aufzeichnungsträger auf einen zweigeteilten Photodetektor reflektiert wird, daß aus der Differenz der beiden Ausgangssignale des zweigeteilten Photodetektors ein Push-Pull-Signal erzeugt wird, dessen Phasenlage mit der Phasenlage des Spurfehlersignals, das vom ersten Laser erzeugt wird, verglichen wird, und daß aus dem Phasenvergleich das Regelsignal zur Abstimmung der Wellenlänge $\lambda_2$ des zweiten Lasers gewonnen wird.

Es zeigen
Figur 1 ein Ausführungsbeispiel der Erfindung
Figur 2 und 3 das Push-Pull-Signal
Figur 4 ein Schnitt durch eine magneto-optische Platte.

Dadurch, daß die Wellenlänge $\lambda_1$ des ersten Lasers viermal so groß gewählt ist wie die Pittiefe, wird die Weglänge $\lambda_1/2$.

Die Pits modulieren daher das vom ersten Laser ausgestellte Licht, wie es bei einer normalen CD-Platte der Fall ist, so daß aus dem reflektierten Licht die in den Pits gespeicherten Daten gewonnen werden können.

Weil aber die Wellenlänge $\lambda_2$ des zweiten Lasers doppelt so groß gewählt ist wie die Pitteife, beträgt die Weglänge genau $\lambda_2$. Die Pits modulieren daher das Licht des zweiten Lasers nicht. Es wird nur die Polarisationsebene des vom zweiten Laser ausgesendeten Lichts in Abhängigkeit von den in der magneto-optischen Schicht des Aufzeichnungsträgers gespeicherten Daten nach rechts oder links gedreht, so daß das Licht des zweiten Lasers nur die in der magneto-optischen Schicht gespeicherten Daten trägt.

Besonders vorteilhaft ist es, für den zweiten Laser einen abstimmbaren Laser vorzusehen. Das vom zweiten Laser ausgestrahlte Licht wird vom Aufzeichnungsträger auf einen zweigeteilten Photodetektor reflektiert. Um die Wellenlänge des zweiten Lasers automatisch auf den besten Wert abzustimmen, wird mittels des zweigeteilten Photodetektors ein Push-Pull-Signal durch Differenzbildung seiner beiden Ausgangssignale erzeugt. Die Phase dieses Push-Pull-Signals, das aus dem Licht des zweiten Lasers gewonnen wird, wird mit der Phase des in bekannter Weise erzeugten Spurfehlersignals verglichen, das aus dem Licht des ersten Lasers gewonnen wird. Bei gleicher oder entgegengesetter Phasenlage ist die Wellenlänge des zweiten Lasers entweder zu groß oder zu klein. Erst wenn das Push-Pull-Signal null wird, ist der zweite Laser auf die richtige Wellenlänge abgestimmt.

Zur automatischen Abstimmung des zweiten Lasers werden das Push-Pull-Signal des zweiten Lasers und das Spurfehlersignal des ersten Lasers den Eingängen eines Multiplizierers zugeführt, dessen Ausgang über einen Tiefpass mit einem Servoverstärker verbunden ist. Am Ausgang des Servoverstärkers ist das Stellsignal für den zweiten Laser abnehmbar.

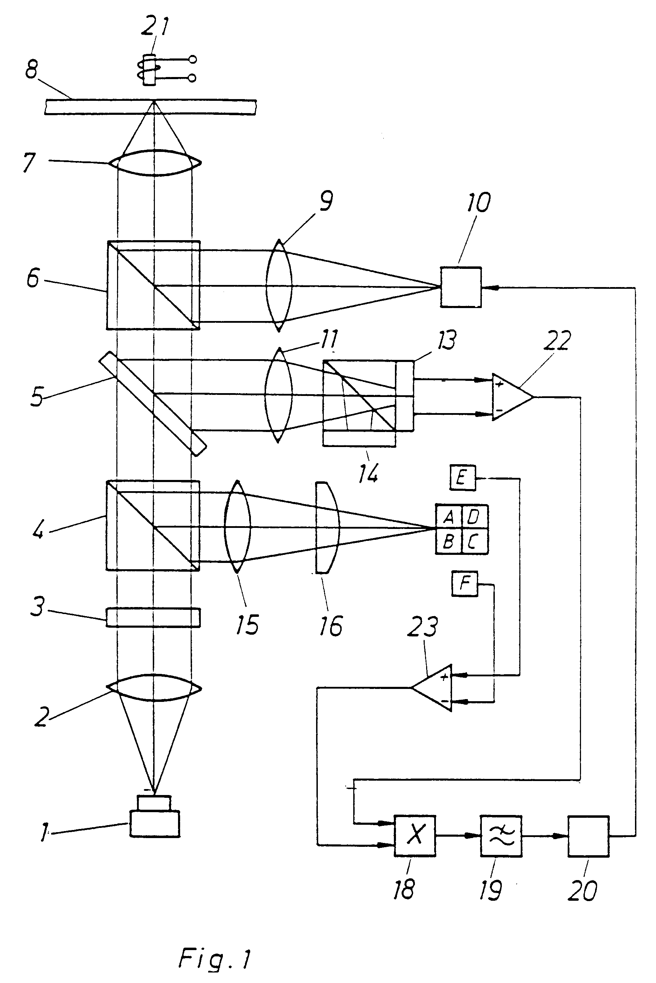

Die Erfindung wird nun an Hand der Figur 1 beschrieben und erläutert.

Das Licht des ersten Lasers 1 strahlt durch eine Kollimatorlinse 2, ein Gitter 3, einen Prismenstrahlteiler 4, einen dichroitischen Spiegel 5, einen Polarisationsstrahlteiler 6 und eine Objektivlinse 7 auf den Aufzeichnungsträger 8, hinter dem ein Schreibmagnet 21 angeordnet ist. Das Licht des zweiten abstimmbaren Lasers 10 strahlt seitlich durch eine Kollimatorlinse 9 auf den Polarisationsstrahlteiler 6, der das Licht des zweiten Lasers 10 rechtwinklig ablenkt, so daß es ebenfalls auf den Aufzeichnungsträger 8 strahlt. Der Aufzeichnungsträger 8 reflektiert das Licht des zweiten Lasers 10 durch die Objektivlinse 7 und den Polarisationsstrahlteiler 6 zum dichroitischen Spiegel 5, der es rechtwinklig zu einer konvexen Linse 11 ablenkt, hinter der ein Polarisationsstrahlteiler 12 angeordnet ist. Ein Teil des Lichts wird vom Polarisationsstrahlteiler 12 rechtwinklig auf einen Photodetektor 14 abgelenkt; der andere Teil strahlt geradlinig durch den Polarisationsstrahlteiler 12 auf einen zweigeteilten Photodetektor 13. Die beiden Ausgänge des zweigeteilten Photodetektors 13 sind mit den Einfangen eines Differenzverstärkers 22 verbunden, der aus den Ausgangssignalen 13a und 13b des zweigeteilten Photodetektors 13 das Push-Pull-Signal PS = 13a - 13b bildet. Das magneto-optisch gewonnene Datensignal MO wird nach folgender Formel mittels eines Addierers und Subtrahierers gebildet: MO = 14a - 13a - 13b. Mit 14a ist das Ausgangssignal des Photodetektors 14 bezeichnet.

Das vom ersten Laser 1 ausgesendete Licht wird vom Aufzeichnungsträger 8 durch die Objektivlinse 7, den Polarisationsstrahlteiler 6 und den dichroitischen Spiegel 5 zurück zum Prismenstrahlteiler 4 reflektiert, der es rechtwinklig auf eine konvexe Linse 15 ablenkt, hinter der eine Zylinderlinse 16 angeordnet ist. Von der Zylinderlinse 16 strahlt das Licht des ersten Lasers 1 auf einen Vierquadrantenphotodetektor 17 mit vier Quadranten A, B, C und D sowie auf zwei Photodetektoren E und F. In bekannter Weise werden das Datensignal OS = AS + BS + CS + DS und das Fokusfehlersignal FE = AS + CS - BS -DS gebildet; mit AS, BS, CS und DS sind die Ausgangssignale der vier Quadranten A, B, C und D bezeichnet. Die Photodetektoren E und F sind mit den Eingängen eines Differenzverstärkers 23 verbunden, der das Spurfehlersingal TE = ES - FS erzeugt. Mit ES und FS sind die Ausgangssignale der beiden Photodetektoren E und F bezeichnet. Der Ausgang des Differenzverstärkers 22 ist mit dem einen Eingang, der Ausgang des Differenzverstärkers 23 mit dem anderen Eingang eines Multiplizierers 18 verbunden, dessen Ausgang über einen Tiefpass 19 mit einem Servoverstärker 20 verbunden ist. Der Ausgang des Servoverstärkers 20 ist mit dem Steuereingang des abstimmbaren Lasers 10 verbunden.

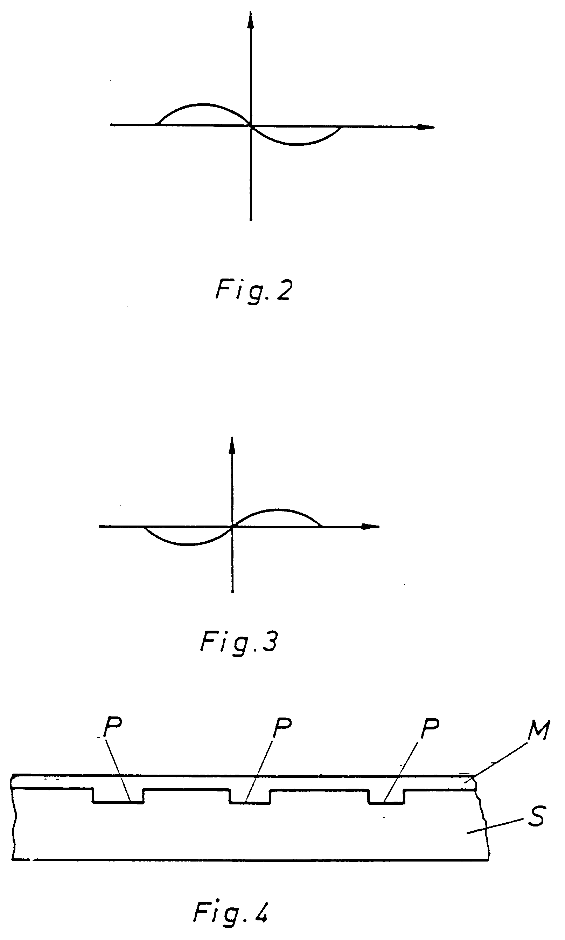

In Figur 2 ist das Push-Pull-Signal PS für den Fall gezeigt, daß die Wellenlänge des abstimmbaren Lasers 10 zu groß ist, während in Figur 3 das Push-Pull-Signal bei zu geringer Wellenlänge des abstimmbaren Lasers 10 abgebildet ist. Weil die Abstimmung der Wellenlänge des abstimmbaren Lasers 10 automatisch erfolgt, spielt die Pittiefe keine Rolle mehr. Es können daher Platten mit unterschiedlichen Pittiefen abgetastet werden.

In Figur 4 ist ein Schnitt durch eine Platte gezeigt. Auf einer Substratschicht S, in der Pits P vorgesehen sind, liegt eine magneto-optische Schicht M.

**Patentansprüche**

1. Magneto-optisches Aufnahme- und/oder Wiedergabegerät für einen Aufzeichnungsträger (8), auf dem Daten sowohl mittels sogenannter Pits als auch in einer magneto-optischen Schicht gespeichert sind, wobei daß zum Abtasten der Pits ein erster Laser (1) dient, dessen Wellenlänge $\lambda_1$ etwa viermal so groß gewählt ist wie die Pittiefe und wobei zum Lesen der in der magneto-optischen Schicht gespeicherten Daten ein zweiter Laser (10) dient, dessen Wellenlänge $\lambda_2$ etwa doppelt so groß gewählt ist wie die Pittiefe, **dadurch gekennzeichnet,** daß der zweite Laser (10) dadurch automatisch auf die richtige Wellenlänge abgestimmt wird, daß das vom zweiten Laser (10) ausgesendete Licht vom Aufzeichnungsträger auf einen zweigeteilten Photodetktor (13) reflektiert wird, daß aus der Differenz der beiden Ausgangssignale (13a, 13b) des zweigeteilten Photodetektors (13) ein Push-Pull-Signal (PS) erzeugt wird, dessen Phasenlage mit der Phasenlage des Spurfehlersignals (TE), das vom ersten Laser (1) erzeugt wird, verglichen wird, und daß aus dem Phasenvergleich das Regelsignal zur Abstimmung der Wellenlänge $\lambda_2$ des zweiten Lasers (10) gewonnen wird.

2. Magneto-optisches Aufzeichnungs- und/oder Wiedergabegerät nach Anspruch 1, **dadurch gekennzeichnet**, daß die Ausgänge des zweigeteilten Photodetektors (13) mit den Eingängen eines ersten Differenzverstärkers (22) verbunden sind, dessen Ausgang mit dem einen Eingang eines Multiplizierers (18) verbunden ist, daß am anderen Eingang des Multiplizierers (18) das Spurfehlersignal (TE) liegt, das in an sich bekannter Weise mittels zweier Photodetektoren (E, F) und eines zweiten Differenzverstärkers (23) erzeugt wird, und daß der Ausgang des Multiplizierers (18) über einen Tiefpass (19) mit dem Eingang eines Servoverstärkers (20) verbunden ist, dessen Ausgang mit dem Steuereingang des abstimmbaren Lasers (10) verbunden ist.

**Claims**

1. Magneto-optical recording and/or reproducing device for a recording medium (8) upon which data is stored not only by means of so-called pits but also in a magneto-optical layer, whereby a first laser (1), with a wavelength *lambda*$_1$ selected approximately four times the depth of the pits, serves to scan the pits, and whereby a second laser (10), with a wavelength *lambda*$_2$ selected approximately twice the depth of the pits, serves to read the data stored in the magneto-optical layer, **characterized in that** the second laser (10) is automatically adjusted to the correct wavelength in that the light emitted from the second laser (10) is reflected from the recording medium onto a two-part photodetector (13), that a push-pull signal (PS) is generated from the difference of the two output signals (13a, 13b) of the two-part photodetector (13) the phase position of said signal being compared with the phase position of the tracking error signal (TE), generated by the first laser (1), and that the regulating signal for adjusting the wavelength *lambda*$_2$ of the second laser (10) is gained from the phase comparison.

2. Magneto-optical recording and/or reproducing device according to claim 1, **characterized in that** the outputs of the two-part photodetector (13) are coupled with the inputs of a first differential amplifier (22), the output of which is coupled with the first input of a multiplier (18), that the tracking error signal (TE) is applied to the other input of the multiplier (18), and said signal (TE) is generated in a manner known as such by means of two photodetectors (E, F) and a second differential amplifier (23), and that the output of the multiplier (18) is coupled via a low-pass (19) with the input of a servo amplifier (20), the output of which is coupled with the control input of the adjustable laser (10).

## Revendications

1. Appareil d'enregistrement et/ou de reproduction magnéto-optique pour un support d'enregistrement (8), sur lequel des données sont mémorisées aussi bien au moyen de ce qu'il est convenu d'appeler des creux que dans une couche magnéto-optique, un premier laser (1) servant à explorer les creux, la longueur d'onde $\lambda_1$ de ce premier laser étant choisie à peu près quatre fois aussi grande que la profondeur des creux et un second laser (10) servant à lire les données mémorisées dans la couche magnéto-optique, ce second laser ayant une longueur d'onde $\lambda_2$ qui est à peu près le double de la profondeur des creux, **caractérisé en ce** que le second laser (10) est automatiquement accordé sur la longueur d'onde correcte par le fait que la lumière émise par le second laser (10) est réfléchie par le support d'enregistrement sur un détecteur photoélectrique divisé en deux (13), qu'un signal push-pull (PS) est produit à partir de la différence des deux signaux de sortie (13a, 13b) du détecteur photoélectrique divisé en deux (13), signal dont la relation de phase est comparée à la relation de phase du signal d'erreur de piste (TE), qui est produit par le premier laser (1), et que le signal de réglage pour accorder la longueur d'onde $\lambda_2$ du second laser (10) est obtenu à partir de la comparaison de phase.

2. Appareil d'enregistrement et/ou de lecture magnéto-optique selon la revendication 1, **caractérisé en ce** que les sorties du détecteur photoélectrique divisé en deux (13) sont reliées aux entrées d'un premier amplificateur différenciateur (22) dont la sortie est reliée à l'une des entrées d'un multiplicateur (18), que le signal d'erreur de piste (TE), qui est produit de manière connue en soi au moyen de deux détecteurs photoélectriques (E, F) et d'un second amplificateur différenciateur (23), se trouve à l'autre entrée du multiplicateur (18) et que la sortie du multiplicateur (18) est reliée par un passe-bas (19) à l'entrée d'un amplificateur asservi (20) dont la sortie est reliée à l'entrée de commande du laser accordable (10).

Fig.1

Fig. 2

Fig. 3

Fig. 4